# FASCICULE DE BREVET EUROPEEN

(11) **EP 2 171 327 B1**
(45) Date de publication et mention de la délivrance du brevet: **06.04.2011**
(21) Numéro de dépôt: 08774930.5
(22) Date de dépôt: 09.07.2008
(51) Int. Cl.: F16K 17/38

(54) **SOUPAPE DE SECURITE POUR FLUIDE SOUS HAUTE PRESSION**
HOCHDRUCKFLUIDSICHERHEITSVENTIL
HIGH-PRESSURE FLUID SAFETY VALVE

(30) Priorité: 16.07.2007 FR 0705168
(43) Date de publication de la demande: 07.04.2010
(73) Titulaire: Société de Technologie MICHELIN, 63000 Clermont-Ferrand (FR); MICHELIN Recherche et Technique S.A., 1763 Granges-Paccot (CH)
(72) Inventeur: GRANDJEAN, Arnaud, CH-1700 Fribourg (CH); WALSER, Daniel, CH-1700 Fribourg (CH)
(74) Mandataire: Lasson, Cédric Y. M.
(86) Numéro de dépôt international: PCT/EP2008/058925
(87) Numéro de publication internationale: WO 2009/010436

(56) Documents cités:
- WO-A-93/23693
- US-A- 5 048 751
- US-A- 5 071 066

## Description

La présente invention se rapporte au stockage des fluides sous haute pression, comme dans le document US 5 048 751. Elle est notamment mais pas uniquement applicable pour le stockage d'hydrogène gazeux et/ou le stockage d'oxygène gazeux dans un véhicule routier, par exemple un véhicule à pile à combustible.

Dans ce domaine, la pression de stockage du gaz est couramment de 30 MPa (300 bar). La demande de brevet EP 1 591 704 décrit un tel véhicule et son système de purge de sécurité. Ce système permet d'assurer la purge des réservoirs de gaz sous pression en cas d'incendie ou en cas d'élévation anormale de la pression interne des réservoirs grâce à plusieurs soupapes de sécurité dont certaines sont sensibles à une élévation de température sous le véhicule et d'autres sont sensibles à une surpression interne du gaz. Toutes les soupapes débouchent dans un circuit de purge organisé dans un double plancher spécifique du véhicule, l'hydrogène libéré étant ensuite guidé vers un orifice de décharge situé à l'arrière et en haut du véhicule. Dans ce document EP 1 591 704 la sécurité vis-à-vis des risques d'explosion des réservoirs du véhicule est donc assurée par la mise en oeuvre combinée de plusieurs soupapes différentes.

Un objectif de l'invention est d'assurer un niveau de sécurité au moins équivalent pour un coût sensiblement réduit.

Un autre objectif de l'invention est de faciliter la conception et l'assemblage du véhicule ainsi que sa maintenance.

L'invention propose une soupape de sécurité pour circuit de fluide sous haute pression, ladite soupape comprenant un corps, un piston mobile par rapport au corps entre une position de fermeture et une position de purge, un élément thermiquement déformable agissant pour provoquer le mouvement du piston de la position de fermeture vers la position de purge au-delà d'une température de purge afin de relier le circuit à un conduit d'évacuation, le piston étant appliqué contre un siège du corps par la pression du fluide, l'élément thermiquement déformable agissant contre la pression du fluide pour soulever le piston du siège, de la position de fermeture vers la position de purge, la soupape comprenant en outre un dispositif de libération de surpression sensible à la pression du fluide et configuré pour relier le circuit au conduit d'évacuation lorsque la pression du circuit atteint une pression de déclenchement.

L'élément thermiquement déformable est de préférence une pastille à mémoire de forme.

De préférence, le dispositif de libération de surpression consiste en un opercule configuré pour céder à la pression de déclenchement afin de libérer un passage de surpression vers le conduit d'évacuation.

De préférence, le piston est solidaire d'une tige soumise à l'action de l'élément thermiquement déformable.

De préférence encore, l'opercule est situé sur le piston, le passage de surpression comprenant un alésage pratiqué dans la tige du piston.

Selon une première variante, le passage de surpression comprend un alésage non débouchant pratiqué dans la tige, l'opercule étant formé par une peau dont une face correspond au fond de l'alésage, l'autre face de l'opercule correspondant à la surface du piston soumise à la pression du fluide.

Selon une deuxième variante, l'opercule consiste en une pièce rapportée sur le piston.

De préférence, le conduit d'évacuation comprend une connexion banjo maintenue serrée entre un premier épaulement du corps et une virole de serrage filetée sur le corps. Alternativement, le corps étant monobloc et apte à être vissé sur le circuit, la connexion banjo est maintenue serrée entre le circuit et un deuxième épaulement du corps.

De préférence, le piston est en outre plaqué contre le siège par l'action d'un ressort. De préférence encore, le ressort agit entre le corps et la tige du piston.

De préférence, le corps, le piston, le siège, la tige du piston et l'opercule ont une forme générale de révolution autour d'un axe commun.

D'autres caractéristiques et avantages de l'invention apparaîtront grâce à la description de modes préférés de réalisation. Les figures représentent respectivement:
- Figure 1 : vue en coupe axiale d'une soupape selon un premier mode de réalisation de l'invention ;
- Figure 2 : vue en coupe axiale de la soupape de la figure 1, le piston étant dans la position ouverte ;
- Figure 3 : vue en coupe axiale à plus grande échelle de la partie supérieure du piston de la soupape de la figure 1 (détail B) ;
- Figure 4 : vue similaire à la figure 3 montrant l'opercule de la soupape de la figure 1 après une surpression interne ;
- Figure 5 : vue en perspective et en coupe axiale partielle de la soupape de la figure 1.
- Figure 6 : vue en coupe axiale d'une soupape selon un deuxième mode de réalisation de l' invention ;
- Figure 7 : vue à plus grande échelle du détail B de la figure 6 montrant l'opercule rapporté ;
- Figure 8 : vue en coupe axiale d'une soupape selon un troisième mode de réalisation de l' invention ;
- Figure 9 : vue schématique de trois-quarts arrière d'un véhicule équipé de soupapes de sécurité selon l'invention.

Sur les différentes figures, les éléments identiques ou similaires portent des références identiques, leur description n'est donc pas reprise systématiquement.

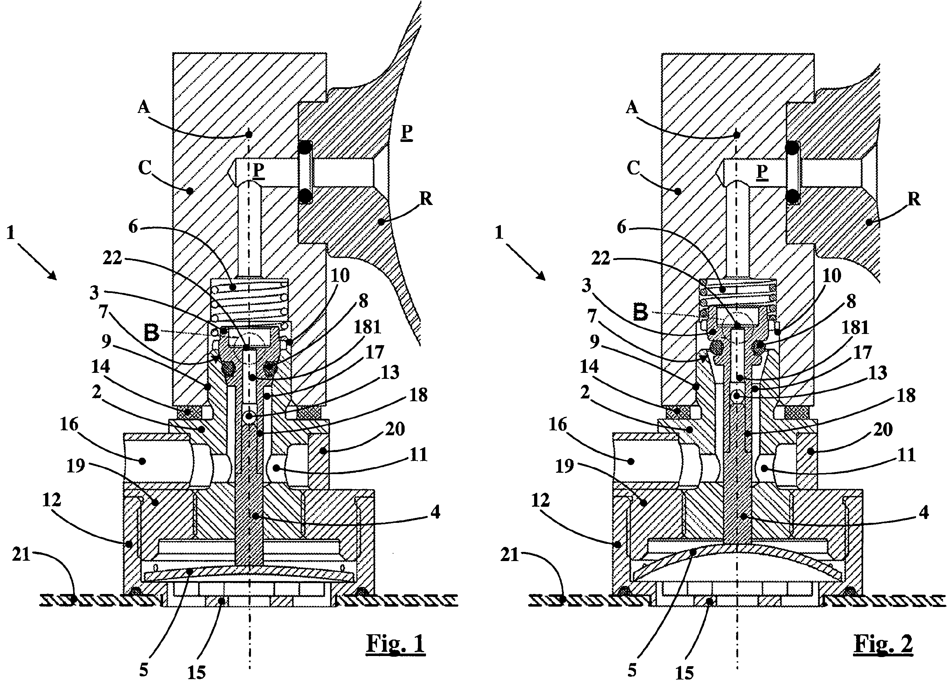

En référence à la figure 1, on voit en coupe axiale une soupape de sécurité 1 connectée à un circuit C de stockage de gaz sous pression. Le circuit relie la soupape à un ou de préférence plusieurs réservoirs R. La soupape 1 pourrait naturellement être reliée directement au réservoir. Le corps 2 de la soupape est une pièce de révolution d'axe A comportant en outre des perçages et des filetages. A son extrémité connectée au circuit C, le corps de la soupape comporte un filetage 9 apte à coopérer avec un logement fileté 10 du circuit. Le corps comporte en son axe A un siège 7 de portée conique adapté pour recevoir un piston 3 également conique. Le piston est axialement mobile par rapport au corps de la soupape entre une position de fermeture et une position de purge (bien visible en comparant les figure 1 et 2). Un joint torique 8 assure une parfaite étanchéité du piston dans le siège conique en position de fermeture. Le piston est plaqué contre le siège par la pression du gaz. Un ressort de précharge 6, prenant appui sur un épaulement du logement 10, agit sur le piston dans le même sens que la pression du gaz, c'est à dire que le ressort tend également à maintenir la soupape en position de fermeture. A son autre extrémité, celle destinée à être soumise aux variations de température, la soupape comporte un élément thermiquement déformable, ici une pastille à mémoire de forme 5, qui commande l'ouverture de la soupape par l'intermédiaire d'un poussoir 4 agissant sur la tige 18 du piston. La pastille 5 est sensible à la température ambiante comme exposé dans le document EP 1 591 704, c'est à dire que lorsque sa température franchit une valeur de purge donnée (par exemple 80 °C), la pastille adopte une forme plus bombée, ce qui soulève le piston 3 de son siège 7, comme visible à la figure 2. comme décrit plus haut, ce mouvement d'ouverture s'effectue contre la force produite par la pression interne du réservoir, par exemple de 30 MPa (300 bar). Cette déformation de la pastille est stable, c'est à dire irréversible (au moins thermiquement). Dans sa position de purge, le piston libère la pression de gaz par l'intermédiaire du conduit de purge 17 (situé autour de la tige 18) vers un conduit d'évacuation 16. Un perçage radial 11 dans le corps 2 relie le conduit de purge au conduit d'évacuation 16.

Ce fonctionnement permet à la soupape d'assurer une sécurité anti-explosion vis-à-vis d'une augmentation de température au-delà d'une température de purge par exemple du fait d'un incendie sous le véhicule ou à proximité.

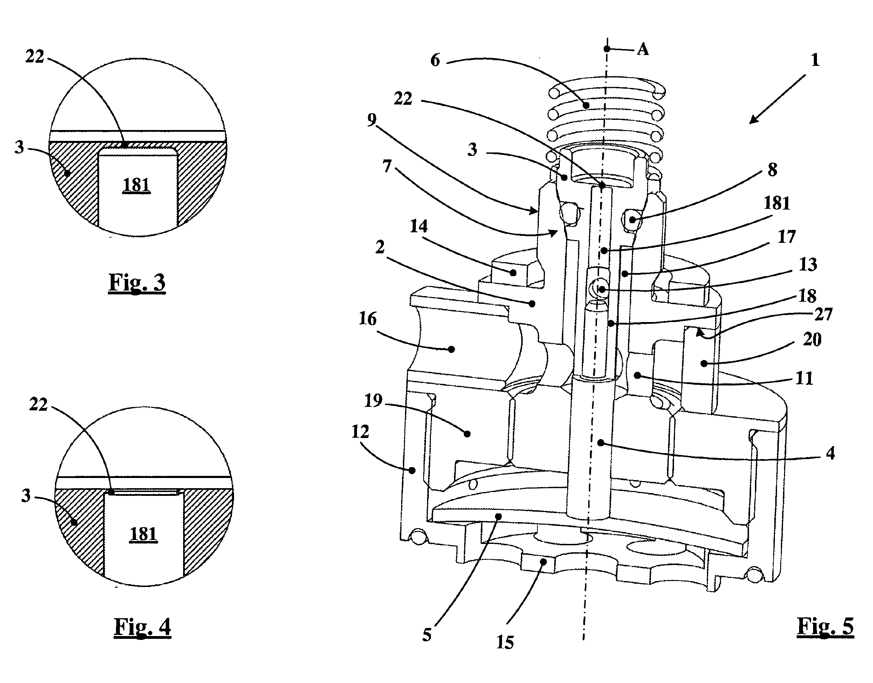

La soupape selon l'invention permet en outre d'assurer la sécurité vis-à-vis d'une surpression interne au circuit, quelle que soit d'ailleurs l'origine de cette surpression. Pour cela, la tige 18 du piston 3 est creuse et un opercule 22 est formé à la surface du piston. Comme on le voit mieux à la figure 3 qui montre en détail cette partie du piston, l'opercule est ici une peau dont une face (inférieure sur les figures) correspond au fond de l'alésage 181 pratiqué dans la tige et l'autre face (supérieure sur les figures) correspond à la surface horizontale du piston, celle qui est en permanence soumise à la pression du gaz. Lorsque la pression interne (P) du circuit atteint une valeur critique (appelée par la suite « pression de déclenchement »), l'opercule 22 cède définitivement, se détache (comme représenté à la figure 4) ou se déchire pour libérer le gaz dans la tige 18 et à travers un perçage radial 13 reliant l'intérieur de la tige au conduit de purge 17. Ce type de dispositif de libération de surpression est couramment appelé « burst disc » ou « disque de rupture ». Par exemple, dans le cas d'un piston en acier inoxydable dont la résistance à la rupture est de l'ordre de 550 MPa, un opercule d'une épaisseur de 0.05 mm et d'un diamètre de 2 mm définissent une pression de déclenchement de l'ordre de 35 MPa (350 bars). La figure 4 représente le cas où l'opercule est complètement détaché mais il peut être préférable que l'opercule demeure partiellement attaché au piston.

La figure 5 montre en coupe et en perspective la soupape des figures 1 à 4 (dans la position de fermeture de la figure 1). Sur cette vue, on voit bien que le conduit d'évacuation 16 est relié à la soupape par un connecteur 20 couramment appelé « banjo ». L'intérêt d'utiliser ici un connecteur banjo 20 est de pouvoir orienter librement le conduit d'évacuation 16 par rapport au corps 2 de la soupape. Ainsi, une fois le corps de la soupape vissé dans le circuit et le joint plat 14 serré de manière étanche, on pose le connecteur banjo selon l'orientation que l'on souhaite pour le conduit d'évacuation 16. Le banjo est serré à son tour sur le corps, précisément sur un premier épaulement 27 du corps, par l'intermédiaire de la virole de serrage 19. La virole 19 est vissée sur un filetage entourant la partie inférieure du corps de la soupape. Le conduit d'évacuation 16 rejoint ensuite une zone choisie pour la mise à l'air du gaz, par exemple à l'arrière et en haut du véhicule comme proposé dans la demande EP 1 591 704 (voir figure 1 de ce document). On peut utiliser un banjo à deux sorties afin d'interconnecter plusieurs soupapes le long d'un même conduit d'évacuation 16.

Un culot 12, vissé à son tour sous la virole 19, retient la pastille à mémoire de forme 5 et comporte de préférence une paroi inférieure ajourée 15 afin que la température ambiante régnant sous le plancher 21 (représenté en pointillé aux figures 1 et 2) du véhicule soit rapidement transmise à la pastille.

Comme on le voit bien sur ces figures, le fait que le poussoir 4 soit une pièce rapportée par rapport à la tige 18 permet la réalisation de l'alésage 181 et donc de l'opercule 22, par exemple par enlèvement de matière ou par forgeage. On comprend que d'autres techniques d'obtention de l'alésage 181 et du perçage 13 (par exemple par moulage à noyau perdu) peuvent conduire à une structure différente pour une fonction équivalente.

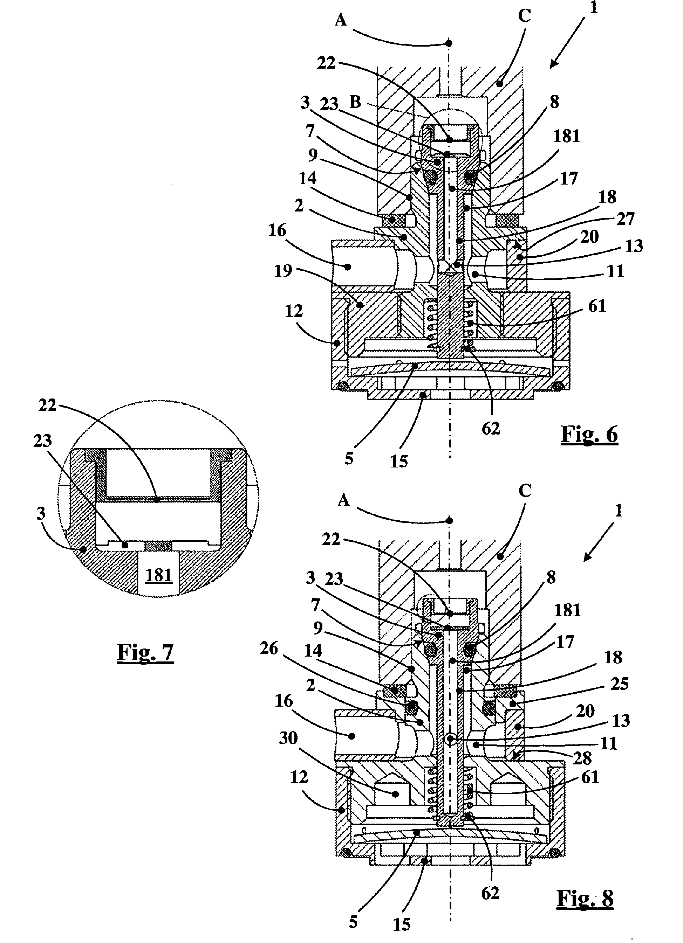

A la figure 6, on a représenté un second mode de réalisation de la soupape de sécurité de l'invention. Il diffère du premier mode (figures 1 à 5) en ce que l'opercule 22 est rapporté sur le piston 3 et non formé directement dans sa surface supérieure. Le fonctionnement du dispositif de libération de surpression est le même que pour le premier mode mais du fait de la plus grande surface de l'opercule, son épaisseur peut être également plus importante ce qui facilite son obtention. De plus, comme l'opercule est rapporté, l'alésage 181 à l'intérieur de la tige 18 peut déboucher en haut de la tige et non plus en bas, ce qui permet de se passer d'un élément de fermeture comme le poussoir 4 du premier mode de réalisation. Ce deuxième mode de réalisation diffère également du premier mode en ce le ressort de précharge 61 est placé en bas de la soupape. Il agit entre le corps 2 et un élément d'arrêt (circlip 62) solidaire de la tige du piston. Ceci permet, entre autres choses, de démonter la soupape du circuit C sans que le ressort n'ait tendance à l'éjecter. Au contraire, le corps, le ressort et le piston demeurent solidaires sans risque de perdre ou de détériorer l'une ou l'autre pièce lors de ce démontage. De plus, la soupape peut être connectée sur une plus large gamme de circuits ou de réservoirs (formes ou matériaux différents) car il n'est plus nécessaire que la connexion procure un épaulement sur lequel le ressort vient prendre appui comme dans les modes de réalisation précédents.

A la figure 7, on a représenté à une échelle supérieure le détail B de la figure 6. On y voit l'opercule 22 rapporté dans le piston 3. On y voit également une grille 23 disposée de manière à retenir l'éventuel morceau qui pourrait (en cas de dépassement de la pression de déclenchement) se détacher de l'opercule et venir obstruer le passage du gaz vers l'intérieur 181 de la tige du piston. L'opercule rapporté 22 est de préférence fixé au piston de manière étanche (par exemple par soudage par bombardement électronique).

A la figure 8, on a représenté un troisième mode de réalisation de l'invention. Ce mode de réalisation reprend les caractéristiques spécifiques du deuxième mode de réalisation (figure 6), c'est à dire les principes de l'opercule rapporté et du ressort situé en partie inférieure de la soupape. Le mode de réalisation de la figure 8 diffère en outre des deux premiers modes en ce que le corps 2 ne prend pas directement appui sur le joint 14 mais seulement par l'intermédiaire d'une bague épaulée 25. Cette bague annulaire est glissante sur le corps 2 ce qui permet d'extraire axialement le corps de la soupape sans avoir à déplacer le banjo 20. Puisque la soupape peut maintenant être extraite du logement 10, du joint 14 et du banjo 20 dans le même sens (vers le bas de la figure), la partie basse de la soupape peut de plus être monobloc au lieu d'être en deux parties vissées l'une sur l'autre (voir corps 2 et virole 19 de la figure 6). Le banjo 20 est alors maintenu serré par un deuxième épaulement (28) du corps de la soupape. Le serrage de la soupape sur le circuit peut être fait à l'aide d'une clé à ergots (voir évidements 30 du corps). Un joint torique 26 assure l'étanchéité entre la bague 25 et le corps 2.

La figure 8 montre une bague épaulée 25 indépendante du banjo 20. On comprend cependant que les fonctions de centrage et d'étanchéité de la bague 25 peuvent être reprises par un banjo spécialement adapté ce qui rendrait ladite bague inutile.

Sur l'ensemble des figures, la liaison du culot 12 au corps 2 ou à la virole 19 est représentée comme une liaison filetée. Un autre type de liaison (par exemple par baïonnette) peut permettre un accès plus rapide à la pastille à mémoire de forme 5.

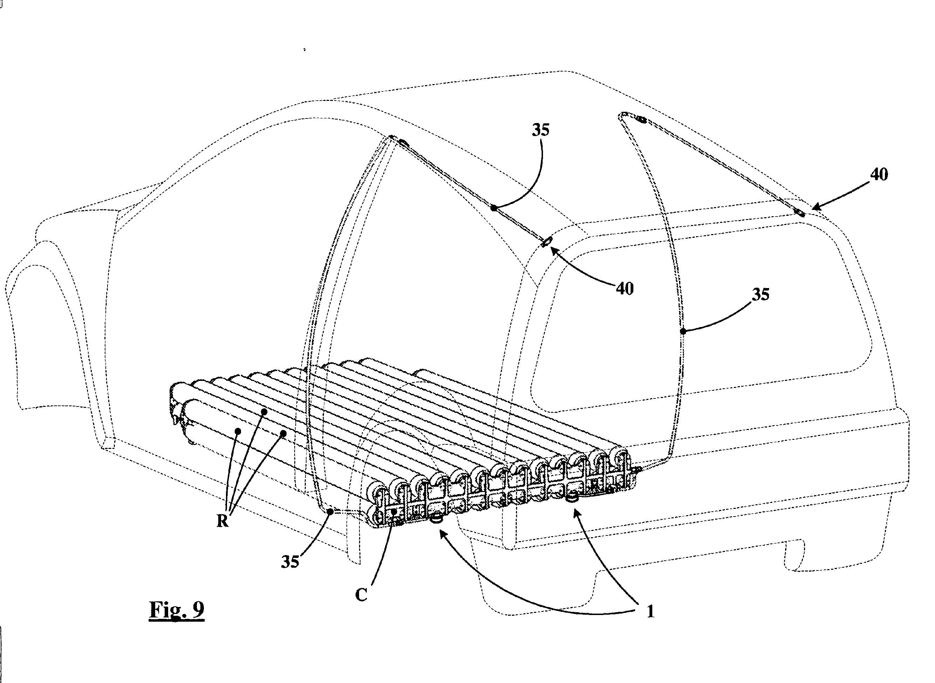

La figure 9 montre (partiellement) un véhicule équipé de la soupape de sécurité selon l'invention. Sur cet exemple, on voit bien les nombreux réservoirs R, reliés entre eux et à deux soupapes de sécurité 1 par l'intermédiaire d'un circuit C. Les conduits d'évacuation sont reliés à l'extérieur par des canalisations 35 cheminant dans la carrosserie vers des orifices de décharge 40 situées en haut et à l'arrière du véhicule. On comprend qu'une seule soupape selon l'invention et une seule canalisation pourrait suffire. Le fait de prévoir deux soupapes et deux évacuations indépendantes sur un même circuit permet cependant d'élargir la sensibilité à la température extérieure et aussi de créer une redondance favorisant encore la sécurité. En effet, si l'une des canalisations est obstruée, le circuit peut encore être déchargé par l'intermédiaire de l'autre. De plus, si (comme évoqué plus haut) les conduits d'évacuations des deux soupapes sont reliés entre eux par une canalisation (non représentée ici), la décharge de la soupape gauche peut se faire au travers de la canalisation droite et inversement.

Les pièces qui composent la soupape de sécurité selon l'invention ont pour la plupart une forme générale de révolution. Ainsi la production de chaque pièce et leur assemblage sont relativement simples et donc peu coûteux.

La soupape de sécurité selon l'invention vient d'être décrite en référence à une utilisation dans un véhicule mais elle est bien sûr utilisable dans d'autres circuits de stockage de gaz mais aussi de liquides, par exemple dans des unités de production ou de transformation ou des installations de stockage fixes. En particulier, sa forme de révolution et son conduit d'évacuation librement orientable permettent une implantation de la soupape dans n'importe quelle position et selon n'importe quelle orientation.

L'élément thermiquement déformable (5) peut aussi, au lieu de soulever directement le piston de son siège, provoquer indirectement son mouvement du piston de la position de fermeture vers la position de purge par exemple en libérant l'action d'un ressort par l'ouverture d'un verrou.

Dans les configurations illustrées ici, après une purge d'origine thermique, il suffit de remplacer la pastille ou même de rendre mécaniquement à la pastille sa forme originelle pour que la soupape soit de nouveau opérationnelle. Il peut au contraire dans certaines applications spécifiques être souhaitable pour des raisons de sécurité de mettre le circuit en panne définitive à la suite d'une purge d'origine thermique. Pour cela on peut prévoir que le mouvement d'ouverture du piston déplace l'opercule vers une pointe qui le déchire définitivement, auquel cas le retour à des conditions thermiques normales et le remplacement de la pastille ne sont plus suffisants pour permettre la remise en pression du circuit.

## Revendications

1. Soupape de sécurité (1) pour circuit (C) de fluide sous haute pression (P), ladite soupape comprenant un corps (2), un piston (3) mobile par rapport au corps entre une position de fermeture et une position de purge, un élément thermiquement déformable (5) agissant pour provoquer le mouvement du piston de la position de fermeture vers la position de purge au-delà d'une température de purge afin de relier le circuit à un conduit d'évacuation (16), le piston étant appliqué contre un siège (7) du corps par la pression du fluide, l'élément thermiquement déformable (5) agissant contre la pression du fluide pour soulever le piston du siège, de la position de fermeture vers la position de purge, la soupape comprenant en outre un dispositif de libération de surpression sensible à la pression du fluide et configuré pour relier le circuit au conduit d'évacuation lorsque la pression (P) du circuit atteint une pression de déclenchement.

2. Soupape de sécurité selon la revendication 1 dans laquelle l'élément thermiquement déformable (5) est une pastille à mémoire de forme.

3. Soupape de sécurité selon l'une des revendications précédentes dans laquelle le dispositif de libération de surpression consiste en un opercule (22) configuré pour céder à la pression de déclenchement afin de libérer un passage de surpression (181, 13) vers le conduit d'évacuation (16).

4. Soupape de sécurité selon l'une des revendications précédentes dans laquelle le piston est solidaire d'une tige (18) soumise à l'action de l'élément thermiquement déformable (5).

5. Soupape de sécurité selon les revendications 3 et 4 dans laquelle l'opercule (22) est situé sur le piston, le passage de surpression (181, 13) comprenant un alésage (181) pratiqué dans la tige du piston.

6. Soupape de sécurité selon la revendication 3 dans laquelle le passage de surpression comprend un alésage (181) non débouchant pratiqué dans la tige, l'opercule (22) étant formé par une peau dont une face correspond au fond de l'alésage (181), l'autre face de l'opercule correspondant à la surface du piston (3) soumise à la pression (P) du fluide.

7. Soupape de sécurité selon l'une des revendications 3 à 5, dans laquelle l'opercule consiste en une pièce rapportée sur le piston.

8. Soupape de sécurité selon l'une des revendications précédentes, dans laquelle le conduit d'évacuation (16) comprend une connexion banjo (20) maintenue serrée entre un premier épaulement (27) du corps (2) et une virole de serrage (19) filetée sur le corps.

9. Soupape de sécurité selon l'une des revendications 1 à 7, dans laquelle le conduit d'évacuation (16) comprend une connexion banjo (20), le corps (3) étant monobloc et apte à être vissé sur le circuit, la connexion banjo étant maintenue serrée entre le circuit (C) et un deuxième épaulement (28) du corps.

10. Soupape de sécurité selon l'une des revendications précédentes, dans laquelle le piston (3) est en outre plaqué contre le siège (7) par l'action d'un ressort (6 ; 61).

11. Soupape de sécurité selon la revendication 10, dans laquelle le ressort (61) agit entre le corps (2) et la tige (18) du piston.

12. Soupape de sécurité selon l'une des revendications précédentes prises en combinaison avec les revendications 4 et 5, dans laquelle le corps (2), le piston (3), le siège (7), la tige du piston (18) et l'opercule (22) ont une forme générale de révolution autour d'un axe (A) commun.

13. Soupape de sécurité selon l'une des revendications précédentes, dans laquelle les portées du piston (3) et du siège (7) sont des portées coniques.

## Claims

1. Safety valve (1) for a fluid circuit (C) under high pressure (P), the said valve comprising a body (2), a piston (3) able to move with respect to the body between a closed position and a purge position, a thermally deformable element (5) acting to cause the piston to move from the closed position to the purge position above and beyond a purge temperature so as to connect the circuit to a discharge duct (16), the piston being pressed against a seat (7) of the body by the pressure of the fluid, the thermally deformable element (5) acting against the pressure of the fluid to lift the piston off the seat, from the closed position to the purge position, the valve further comprising an overpressure relief device sensitive to the pressure of the fluid and configured to connect the circuit to the discharge duct when the pressure (P) of the circuit reaches a trip pressure.

2. Safety valve according to Claim 1, in which the thermally deformable element (5) is a shape memory pellet.

3. Safety valve according to one of the preceding claims, in which the overpressure relief device consists of a diaphragm (22) configured to yield at the trip pressure in order to open an overpressure passage (181, 13) towards the discharge duct (16).

4. Safety valve according to one of the preceding claims, in which the piston is secured to a stem (18) subject to the action of the thermally deformable element (5).

5. Safety valve according to Claims 3 and 4, in which the diaphragm (22) is situated on the piston, the overpressure passage (181, 13) comprising a bore (181) made in the stem of the piston.

6. Safety valve according to Claim 3, in which the overpressure passage comprises a blind bore (181) made in the stem, the diaphragm (22) being formed by a skin one face of which corresponds to the end wall of the bore (181), the other face of the diaphragm corresponding to that surface of the piston (3) that is subject to the pressure (P) of the fluid.

7. Safety valve according to one of Claims 3 to 5, in which the diaphragm consists of a part attached to the piston.

8. Safety valve according to one of the preceding claims, in which the discharge duct (16) comprises a banjo connection (20) held tightly between a first shoulder (27) of the body (2) and a clamping ring (19) screwed onto the body.

9. Safety valve according to one of Claims 1 to 7, in which the discharge duct (16) comprises a banjo connection (20), the body (3) being of one piece and able to be screwed onto the circuit, the banjo connection being held tightly between the circuit (C) and a second shoulder (28) of the body.

10. Safety valve according to one of the preceding claims, in which the piston (3) is also pressed firmly against the seat (7) by the action of a spring (6; 61).

11. Safety valve according to Claim 10, in which the spring (61) acts between the body (2) and the stem (18) of the piston.

12. Safety valve according to one of the preceding claims considered in combination with Claims 4 and 5, in which the body (2), the piston (3), the seat (7), the stem of the piston (18) and the diaphragm (22) all have an overall shape exhibiting symmetry of revolution about a common axis (A).

13. Safety valve according to one of the preceding claims, in which the bearing surfaces of the piston (3) and of the seat (7) are conical bearing surfaces.

## Patentansprüche

1. Sicherheitsventil (1) für einen Fluidkreislauf (C) unter Hochdruck (P), wobei das Ventil einen Körper (2), einen bezüglich des Körpers zwischen einer Schließstellung und einer Entleerungsstellung beweglichen Kolben (3), ein wärmeverformbares Element (5), das agiert, um die Bewegung des Kolbens aus der Schließstellung in die Entleerungsstellung oberhalb einer Entleerungstemperatur zu bewirken, um den Kreislauf mit einem Abfuhrkanal (16) zu verbinden, wobei der Kolben durch den Druck des Fluids gegen einen Sitz (7) des Körpers gedrückt wird, wobei das wärmeverformbare Element (5) gegen den Druck des Fluids wirkt, um den Kolben aus der Schließstellung in die Entleerungsstellung vom Sitz zu heben, wobei das Ventil außerdem eine Überdruck-Freisetzvorrichtung enthält, die auf den Druck des Fluids reagiert und konfiguriert ist, um den Kreislauf mit dem Abfuhrkanal zu verbinden, wenn der Druck (P) des Kreislaufs einen Auslösedruck erreicht.

2. Sicherheitsventil nach Anspruch 1, bei dem das wärmeverformbare Element (5) ein Plättchen mit Formgedächtnis ist.

3. Sicherheitsventil nach einem der vorhergehenden Ansprüche, bei dem die Überdruck-Freisetzvorrichtung aus einer Abdeckung (22) besteht, die konfiguriert ist, um dem Auslösedruck nachzugeben, um einen Überdruckdurchlass (181, 13) zum Abfuhrkanal (16) freizugeben.

4. Sicherheitsventil nach einem der vorhergehenden Ansprüche, bei dem der Kolben fest mit einer Stange (18) verbunden ist, die der Wirkung des wärmeverformbaren Elements (5) ausgesetzt ist.

5. Sicherheitsventil nach den Ansprüchen 3 und 4, bei dem die Abdeckung (22) sich auf dem Kolben befindet, wobei der Überdruckdurchlass (181, 13) eine Bohrung (181) enthält, die in der Stange des Kolbens ausgearbeitet ist.

6. Sicherheitsventil nach Anspruch 3, bei dem der Überdruckdurchlass eine Sackbohrung (181) enthält, die in der Stange ausgearbeitet ist, wobei die Abdeckung (22) von einer Haut geformt wird, von der eine Seite dem Boden der Bohrung (181) entspricht, während die andere Seite der Abdeckung der Fläche des Kolbens (3) entspricht, die dem Druck (P) des Fluids ausgesetzt ist.

7. Sicherheitsventil nach einem der Ansprüche 3 bis 5, bei dem die Abdeckung aus einem auf den Kolben aufgesetzten Bauteil besteht.

8. Sicherheitsventil nach einem der vorhergehenden Ansprüche, bei dem der Abfuhrkanal (16) eine Winkel-Schwenk-Verbindung (20) enthält, die zwischen einer ersten Schulter (27) des Körpers (2) und einem Gewindeklemmring (19) auf dem Körper eingespannt gehalten wird.

9. Sicherheitsventil nach einem der Ansprüche 1 bis 7, bei dem der Abfuhrkanal (16) eine Winkel-Schwenk-Verbindung (20) enthält, wobei der Körper (3) einstückig und geeignet ist, um auf den Kreislauf geschraubt zu werden, wobei die Winkel-Schwenk-Verbindung zwischen dem Kreislauf (C) und einer zweiten Schulter (28) des Körpers eingespannt gehalten wird.

10. Sicherheitsventil nach einem der vorhergehenden Ansprüche, bei dem der Kolben (3) außerdem durch die Wirkung einer Feder (6; 61) gegen den Sitz (7) gedrückt gehalten wird.

11. Sicherheitsventil nach Anspruch 10, bei dem die Feder (61) zwischen dem Körper (2) und der Stange (18) des Kolbens agiert.

12. Sicherheitsventil nach einem der vorhergehenden Ansprüche in Kombination mit den Ansprüchen 4 und 5, bei dem der Körper (2), der Kolben (3), der Sitz (7), die Stange des Kolbens (18) und die Abdeckung (22) eine allgemeine drehsymmetrische Form um eine gemeinsame Achse (A) haben.

13. Sicherheitsventil nach einem der vorhergehenden Ansprüche, bei dem die Auflageflächen des Kolbens (3) und des Sitzes (7) kegelige Auflageflächen sind.
